(19) Europäisches Patentamt
European Patent Office
Office européen des brevets

(11) **EP 1 650 106 B1**

(12) **EUROPÄISCHE PATENTSCHRIFT**

(45) Veröffentlichungstag und Bekanntmachung des Hinweises auf die Patenterteilung:
**28.01.2009 Patentblatt 2009/05**

(51) Int Cl.:
**B62D 5/04** (2006.01)

(21) Anmeldenummer: **05109619.6**

(22) Anmeldetag: **17.10.2005**

(54) **Vorrichtung zur Reduzierung von Lenkrad-Drehschwingungen an einem Kraftfahrzeug sowie Betriebsverfahren hierfür**

Device for the reduction of steering wheel torsional vibrations in a motor vehicle and operating method therefor

Dispositif pour la réduction des vibrations en rotation d'un volant de direction dans un véhicule à moteur et son procédé de fonctionnement

| | |
|---|---|
| (84) Benannte Vertragsstaaten:<br>**DE FR GB IT**<br><br>(30) Priorität: **21.10.2004 DE 102004051338**<br><br>(43) Veröffentlichungstag der Anmeldung:<br>**26.04.2006 Patentblatt 2006/17**<br><br>(73) Patentinhaber: **Bayerische Motoren Werke Aktiengesellschaft**<br>**80809 München (DE)**<br><br>(72) Erfinder: **von Groll, Max**<br>**59071 Hamm (DE)** | (56) Entgegenhaltungen:<br>**EP-A- 1 142 746      EP-A- 1 541 445**<br>**EP-A- 1 627 797      WO-A-03/076251**<br>**DE-A- 10 344 279      DE-A1- 2 249 655**<br>**DE-A1- 19 615 377      DE-A1- 19 742 370**<br>**US-A1- 2003 120 404      US-A1- 2004 154 857**<br>**US-B1- 6 407 524      US-B1- 6 426 602**<br><br>• **PATENT ABSTRACTS OF JAPAN Bd. 1999, Nr. 09, 30. Juli 1999 (1999-07-30) -& JP 11 105729 A (TOYOTA MOTOR CORP), 20. April 1999 (1999-04-20)**<br>• **PATENT ABSTRACTS OF JAPAN Bd. 1998, Nr. 09, 31. Juli 1998 (1998-07-31) -& JP 10 109656 A (NIPPON SEIKO KK), 28. April 1998 (1998-04-28)** |

**Beschreibung**

Die Erfindung betrifft ein Verfahren zum Betrieb einer Vorrichtung zur Reduzierung von Lenkrad-Drehschwingungen an einem Kraftfahrzeug, wobei mittels eines aktiv ansteuerbareren Aktuators in Form eines elektronisch ansteuerbaren elektrischen Stellmotors Schwingungen eines im Lenkstrang des Fahrzeugs vorgesehenen Übertragungsgliedes für die Lenkvorgabe des Fahrzeugführers zumindest teilweise kompensiert werden, indem der Aktuator an einer Stelle des Lenkstrangs geeignete Gegenschwingungen einleitet Zum technischen Umfeld wird neben der DE 22 49 655 A1 auf die EP 1 114 746 A2 verwiesen.

Das Phänomen von Lenkrad-Drehschwingungen an zweispurigen Kraftfahrzeugen ist grundsätzlich bekannt. Grundsätzlich ist es erwünscht, solche für den Fahrer des Kraftfahrzeugs, d.h. für den Fzg.-Führer an seinem Lenkrad spürbare Drehschwingungen zu eliminieren oder kompensieren, andererseits jedoch soll der Fahrer an seinem Lenkrad eine bestmögliche und durch die Kompensation der Drehschwingungen unbeeinflusste Rückmeldung von der Fahrbahn verspüren.

In der eingangs erstgenannten Schrift DE 22 49 655 A1 ist ein Lenkstrang eines zweispurigen Kraftfahrzeugs vorgeschlagen, mit einem auf die Eigenfrequenz des Lenksystems abgestimmten hydraulischen Tilgerdämpfer als einem hier allgemein sog. Veränderungsglied, bei dem eine auf Federn abgestützte Tilgermasse in einem hydraulischen Dämpfungsmedium mit großen Ausschlägen schwingt.

Die Abstimmung eines derartigen passiven Schwingungstilgers ist zum einen sehr aufwändig, insbesondere jedoch kann dieses bekannte "Veränderungsglied" lediglich in einem begrenzten Frequenzbereich wirken und verfälscht in diesem dann nachteiligerweise die für den Fahrer an seinem Lenkrad spürbare Fahrbahn-Rückmeldung erheblich.

Weiterhin zeigt die EP 1 114 746 A2 eine Vorrichtung, mit der ein Betriebsverfahren nach dem Oberbegriff des Anspruchs 1 ausführbar ist.

Ein verbessertes Verfahren nach dem Oberbegriff des Anspruchs 1 aufzuzeigen, ist Aufgabe der vorliegenden Erfindung.

Die Lösung dieser Aufgabe ist dadurch gekennzeichnet, dass zur Ansteuerung des Aktuators ein Algorithmus verwendet wird, in dem während eines Zeitfensters das Lenkrad-Drehmoment auf periodische Schwingungen, die als Stör-Drehmoment interpretiert und als harmonische Funktion mit einer Amplitude und einer Frequenz beschrieben werden, untersucht wird, denen mittels des Aktuators unter Berücksichtigung von dessen Zeitverzögerung und Amplitudenveränderung ein entsprechendes, diese periodischen Schwingungen im wesentlichen kompensierendes Gegenmoment überlagert wird.

In einem mechanischen Lenkstrang eines Kraftfahrzeugs, der üblicherweise von einem Lenkrad über eine Lenkspindel oder dgl. zu einem Lenkgetriebe führt, von welchem sog. Spurstangen die lenkbaren Fzg.-Räder einschlagen, d.h. lenken, ist an einer geeigneten Stelle in allgemeinster Form irgendein Aktuator eingebunden, der als Veränderungsglied zur zumindest teilweisen Kompensation von periodischen Schwingungen bzw. Stör-Momenten eines im Lenkstrang vorgesehenen sog. Übertragungsgliedes geeignet ansteuerbar ist. Beim sog. Übertragungsglied kann es sich dabei um das Lenkrad selbst handeln, aber auch um die Lenkspindel oder Elemente des Lenkgetriebes. Selbstverständlich kann im mechanischen Lenkstrang ein grundsätzlich bekannter Servomotor oder allg. ein Servoelement vorgesehen sein, das entsprechend einem Lenkwunsch des Fahrers ein diesen unterstützendes Hilfsmoment in den Lenkstrang einleitet.

Beispielsweise kann im Falle eines Lenksystems mit hydraulischer Lenkunterstützung ein (zusätzlicher) Aktuator bzw. elektrischer Stellmotor über ein geeignetes Getriebe direkt auf die vom Lenkrad zum Lenkgetriebe führende Lenkspindel einwirken, und zwar im Sinne einer alternierenden Drehbewegung mit geringer Schwingungs-Amplitude. Torsions-Trägheitseinflüsse und Reibungseinflüsse dieses Aktuators oder Stellmotors sind dabei vernachlässigbar gering, so dass die Rückmeldungen von der Fahrbahn an den Fahrer bzw. an dessen Lenkrad, die nicht von periodischer Schwingungs-Gestalt sind, im wesentlichen unverändert bleiben. Lediglich periodische Schwingungen bzw. die entsprechenden Störmomente im Lenkstrang (bzw. an der Lenkspindel) sollen durch diesen hierfür geeignet angesteuerten Aktuator durch Dreh-Schwingungsübedagerung im wesentlichen kompensiert werden.

Es wird ein Ansteuerungs-Algorithmus für den Aktuator bzw. elektronisch ansteuerbaren elektrischen Stellmotor vorgeschlagen und beschrieben, mit dem periodische Stör-Momente im für den Fahrer an seinem Lenkrad spürbaren Drehmomentverlauf unterdrückt werden können, ohne dass das grundsätzliche Verhalten des Lenksystems, insbesondere bezüglich Rückmeldungsverhalten von der Fahrbahn und Unterstützungsverhalten durch ein Servosystem, nennenswert verändert wird. Im Leck-Drehmomentverlauf liegt bekanntlich eine Überlagerung von Frequenzspektren, resultierend aus der Lenkvorgabe des Fahrers, aus Fahrbahn-Rückmeldung, sowie aus Stör-Momenten vor. Nur letztere sollen mit dem vorgeschlagenen Lenksystem bzw. einem entsprechenden Algorithmus eliminiert werden. Dabei nutzt der vorgeschlagene Algorithmus die Tatsache, dass der wesentliche Teil der Stör-Momente periodisch auftritt.

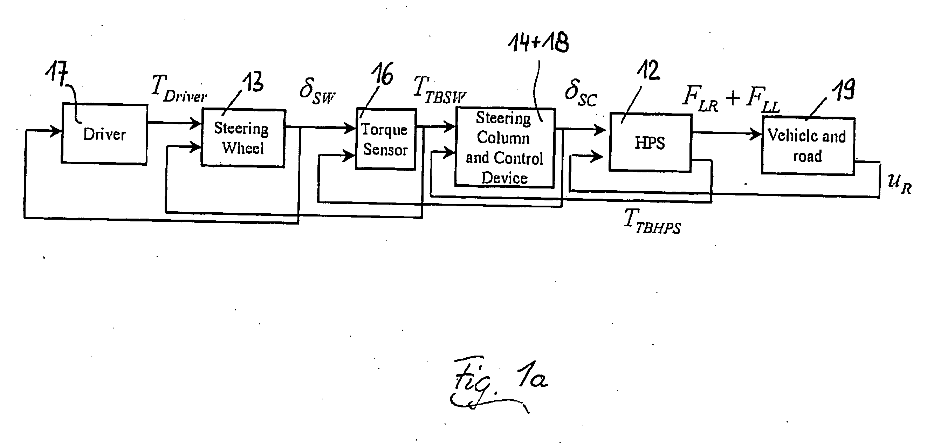

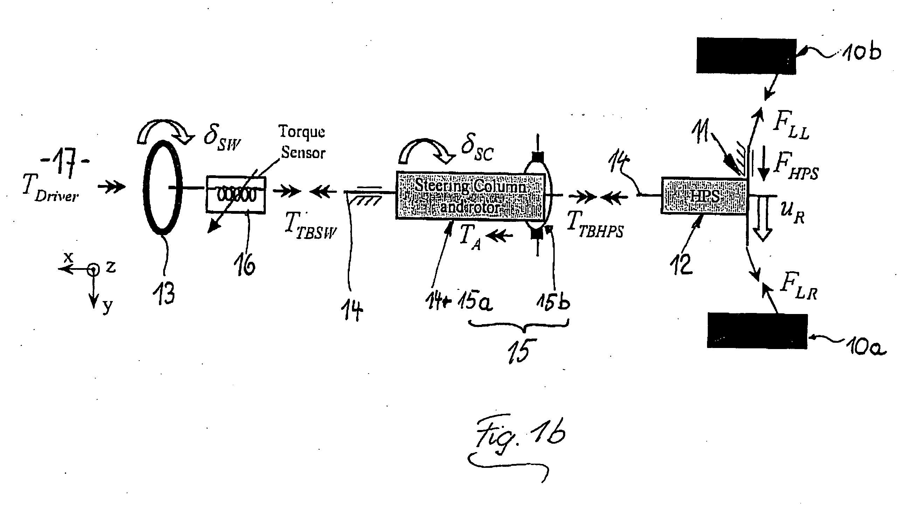

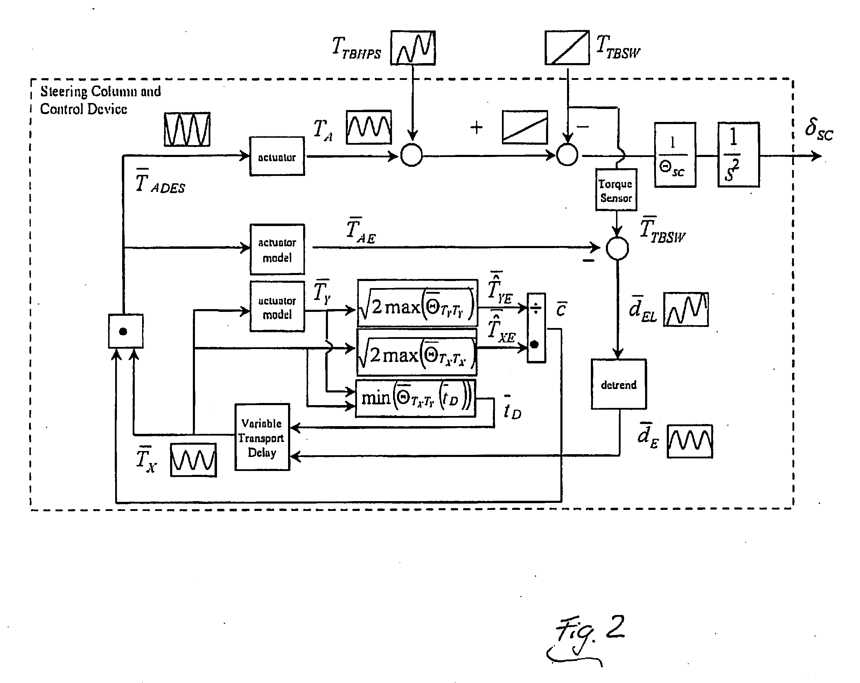

Im weiteren wird dieser Ansteuerungs-Algorithmus analytisch beschrieben. Bezug genommen wird dabei u.a. auf die beigefügte Tabelle 1, in der die verfügbaren und verwendeten Signale sowie die hierfür verwendeten Abkürzungen angegeben sind. Bezug genommen wird weiterhin auf die beigefügte Figur 1a, die das Signalflussdiagramm zeigt, sowie auf Fig.1b, in der ein vereinfachtes Modell für einen entsprechenden mechanischen Lenkstrang dargestellt ist. Figur 2 schließlich zeigt ein Blockschaltbild für den Ansteuerungs-Algorithmus mit der Lenkspindel.

Zunächst auf Fig.1b Bezug nehmend sind mit den Bezugsziffern 10a, 10b die beiden lenkbaren Vorder-Räder eines zweispurigen Kraftfahrzeugs (PKW's) bezeichnet, die über nicht dargestellte Spurstangen eingeschlagen, d.h. gelenkt werden können. Diese Spurstangen werden dazu - wie üblich - von einem Zahnstangen-Lenkgetriebe 11 entsprechend verschoben. Die Position bzw. die jeweilige Verschiebung der Zahnstange ist dabei mit "$u_R$" bezeichnet. Über die dem rechten Fzg.-Rad 10a zugeordnete Spurstange wird dabei die Kraft "$F_{LR}$" und die dem linken Fzg.-Rad 10b zugeordnete Spurstange die Kraft "$F_{LL}$" übertragen. An der Eingangsseite des Zahnstangen-Lenkgetriebes 11 ist ein übliches hydraulisches Lenkunterstützungssystem 12 (auch mit "HPS" = Hydraulic-assisted Power Steering bezeichnet) vorgesehen, über das der vom Fzg.-Führer mit seinem Lenkrad 13 vorgegebene Lenkwunsch in das Lenkgetriebe 11 eingeleitet wird. Vom Lenkrad 13 zum Lenkunterstützungssystem 11, das im übrigen wie üblich einen sog. Torsionsstab enthält, wird der Lenkwunsch des Fahrers über eine Lenkspindel 14 übertragen, die in Fig.1b zwar mit Unterbrechungen dargestellt ist, tatsächlich jedoch - gesamthaft betrachtet - durchgehend verläuft, da hier ein mechanischer Lenkstrang vorliegt, mit einer letztlich durchgehenden mechanischen Verbindung vom Lenkrad 13 bis zu den lenkbaren Rädern 10a, 10b.

In diesem vereinfachten Modell gemäß Fig.1b in die Lenkspindel 14 quasi integriert, weil mit dieser geeignet mechanisch verbunden, ist der Rotor 15a ("rotor") eines als elektrischer Stellmotor ausgebildeten Aktuators 15, der weiterhin einen Stator 15b aufweist. Dabei ist der Rotor 15a des Stellmotors 15 mit der Lenkspindel 14 ("steering column") modellhaft zusammengefasst ("14+15a"), da für die weiteren Betrachtungen das Torsions-Trägheitsmoment $\Theta_{SC}$ dieser Einheit betrachtet wird. Neben einem Lenkwinkel $\delta_{SC}$ der Lenkspindel 14 ist in diesem Abschnitt der Fig.1b ferner noch ein vom Aktuator bzw. Stellmotor 15 eingeleitetes Aktuatormoment $T_A$ symbolisch dargestellt.

Im zwischen dem Lenkrad 13 und der Einheit 14+15a liegenden Abschnitt der Lenkspindel 14 ist ein Drehmomentsensor 16 ("Torque Sensor") vorgesehen, mit dem das vom Fahrer an seinem Lenkrad 13 aufgebrachte Drehmoment ($T_{Driver}$) gemessen werden kann. Neben diesem Drehmoment ($T_{Driver}$) gibt der Fahrer selbstverständlich auch einen Lenkrad-Lenkwinkel $\delta_{SW}$ vor, der sich vom Lenkspindel-Lenkwinkel $\delta_{SC}$ um eine geringe Verwindung unterscheiden kann. In Fig.1b sind weiterhin an unterschiedlichen Stellen übertragene bzw. aufgebrachte Drehmomente dargestellt, und zwar das bereits angesprochene vom Fahrer an seinem Lenkrad 13 aufgebrachte Drehmoment $T_{Driver}$, ferner das am Lenkrad tatsächlich anliegende Lenkrad-Drehmoment $T_{TBSW}$ Lenkrad und ferner das sich durch das Aktuatormoment $T_A$ hiervon unterscheidende Drehmoment $T_{TBHPS}$ am hydraulischen Lenkunterstützungssystem 12 bzw. an dessen Eingangsseite.

Fig.1a zeigt nun das entsprechende Signalflussdiagramm. Vom Fahrer 17 ("Driver") wird das Drehmoment $T_{Driver}$ in das Lenkrad 13 eingeleitet, woraus ein Lenkrad-Lenkwinkel $\delta_{SW}$ über den Drehmomentsensor 16 als Lenkrad-Drehmoment $T_{TBSW}$ in eine sog. Einheit 14+18, die durch die Lenkspindel 14 sowie den hier vorgeschlagenen Steuerungs-Algorithmus 18 ("Steering Column and Control Device") gebildet wird, gelangt. Von hier wird der Lenkspindel-Lenkwinkel $\delta_{SC}$ in das Lenkunterstützungssystem 12 eingeleitet, von dem aus das Lenkunterstützungssystem-Drehmoment $T_{TBHPS}$ rückgeführt wird und insbesondere die Spurstangen-Kräfte $F_{LR}$ und $F_{LL}$ an eine aus dem Fahrzeug und der Straße gebildete Einheit 19 ("Vehicle and road") abgegeben werden. Aus dieser Einheit 19 wird die Zahnstangen-Position oder-Verschiebebewegung $u_R$ an die Einheit 14+18 bzw. insbesondere an den Steuerungsalgorithmus 18 rückgeführt. Sämtliche und somit auch weitere für den vorgeschlagenen Steuerungs-Algorithmus erforderliche Rückführungen sind in diesem Signalflussdiagramm durch Signalpfade mit Pfeilen dargestellt.

In der nun folgenden analytischen Beschreibung des vorgeschlagenen Steuerungs-Algorithmus wird die zu eliminierende oder zumindest im wesentlich zu kompensierende periodische Störung bzw. dieses periodische sog. Störmoment durch eine harmonische Funktion mit der Amplitude $\hat{T}_D$ und der Frequenz $\omega_D$ beschrieben. Der vom Fahrer erzeugte Drehmoment-Anteil kann angenähert durch einen linearen Gradienten ($T_0 + T_1$) innerhalb der Zeit $t \in [t_1, t_2]$ beschrieben werden, wenn dieses Zeitfenster ($t_2 - t_1$) ausreichend klein ist. Folglich gilt für das Drehmoment $T_{TBHPS}$ am hydraulischen Lenkunterstützungssystem die folgende Gleichung (1):

$$\text{Gl.(1)} \qquad T_{TBHPS} = T_0 + T_1 + \hat{T}_D \sin(\omega_D t) + n(t)$$

Dabei steht n(t) für einen stochastischen Momentenanteil mit konstanter Leistungsdichte $S_{NN}(\omega) = K$, durch den Fahrbahnunebenheiten annähernd berücksichtigt werden können.

Im weiteren sind sämtliche variablen Größen, die mit einem oberen Querstrich versehen sind, als bekannt, da durch Messung oder in einem Simulationsmodell ermittelt, vorausgesetzt. In Figur 2 ist das Blockschaltbild für den Ansteuerungs-Algorithmus mit der Lenkspindel (entsprechend den Figuren 1a, 1b) detailliert dargestellt. Dieses beinhaltet den Aktuator bzw. Stellmotor 15 ("actuator"), den hiermit vorgeschlagenen Ansteuerungs-Algorithmus sowie die folgende Bewegungs-Gleichung (2) für die Lenkspindel 14:

$$\mathrm{Gl.(2)} \qquad \ddot{\delta}_{SC}(t)\Theta_{SC} = T_A(t) + T_{TBHPS}(t) - \overline{\overline{T}}_{TBSW}(t)$$

Bedingt durch relativ geringe Dreh-Beschleunigungen der Lenkspindel 14 und wegen des relativ geringen Torsions-Trägheitsmomentes $\Theta_{SC}$ der Einheit 14+15a (Lenkspindel 14 und Rotor 15a des Aktuators/Stellmotors 15) hat die Größe $\ddot{\delta}_{SC}(t)\Theta_{SC}$ einen vernachlässigbar geringen Einfluss auf die Funktionalität des vorgeschlagenen Algorithmus und kann somit zu "Null" gesetzt werden.

Damit ergibt sich die folgende Gleichung (3) aus Gl.(1) in Gl.(2):

$$\mathrm{Gl.(3)} \qquad \overline{T}_{TBSW}(t) = T_A(t) + T_0 + T_1 t + \hat{T}_D \sin(\omega_D t) + n(t)$$

Mit dem hier vorgeschlagenen Algorithmus soll nun das periodische Stör-Moment $\hat{T}_D \sin(\omega_D t)$ aus dem obigen Lenkrad-Drehmoment $T_{TBSW}$ eliminiert werden. Daher wird mit der folgenden Gleichung (4) gefordert:

$$\mathrm{Gl.(4)} \qquad T_A(t) \equiv -\hat{T}_D \sin(\omega_D t)$$

Im Folgenden wird gezeigt, wie der vorgeschlagene Algorithmus diese Gleichung (4) erfüllt. Dazu wird zunächst die periodische Störung rekonstruiert.

Wird das in einem geeigneten Schätzmodell geschätzte Aktuatormoment $\overline{T}_{AE}$ vom mittels des Drehmomentsensors 16 gemessenen Lenkrad-Drehmoment $\overline{T}_{TBSW}$ subtrahiert, entsprechend folgender Gleichung (5), so ergibt sich das geschätztes Störmoment mit linearem Anteil:

$$\mathrm{Gl.(5)} \qquad \overline{T}_{EL}(t) = \overline{T}_{TBSW}(t) - \overline{T}_{AE}(t),$$

Hieraus erhält man zusammen mit Gl.(3) unter der (berechtigten) Voraussetzung, dass $(T_A - \overline{T}_{AE})$ ausreichend klein ist

$$\mathrm{Gl.(6)} \qquad \overline{T}_{EL}(t) = T_0 + T_1 t + \hat{T}_D \sin(\omega_D t) + n(t)$$

für das geschätzte Störmoment mit linearem Anteil.

Mittels der für Frequenzanalysen üblichen Methode "detrend" kann nun die lineare Tendenz von $T_{EL}(t)$ entfernt werden und man erhält eine hinreichende Schätzung für das Stör-Moment entsprechend Gleichung (7):

$$\mathrm{Gl.(7)} \qquad \overline{T}_E(t) = \hat{T}_D \sin(\omega_D t) + n(t)$$

Durch Verzögerung dieses geschätzten Stör-Momentes $\overline{T}_E(t)$ um die Zeit $\overline{t}_D$, die in der an späterer Stelle noch dargestellten Gleichung (22) definiert ist, wird nun dieses geschätzte Stör-Moment $\overline{T}_E(t)$ dahingehend verzögert, dass dieses Stör-Moment und das gewünschte Aktuator-Moment $T_A$ zueinander um 180° Grad phasenverschoben sind, was Voraussetzung für eine erfolgreiche Kompensation ist.

Man erhält somit zunächst ein Sollmoment des Aktuator-Modells gemäß folgender Gleichung (8), die das phasenkorrigierte, aber noch nicht amplitudenkorrigierte erforderliche Stellmoment des Aktuators wiedergibt:

$$\mathrm{Gl.(8)} \qquad \overline{T}_X(t) = \hat{T}_D \sin(\omega_D(t - \overline{t}_D)) + n(t - \overline{t}_D)$$

Vorausgesetzt das Übertragungsverhalten des Aktuators ist linear und zeitinvariant, so liefert das Aktuator-Modell g(t) auf harmonische Anregung mit

$$\text{GI.(9)} \qquad \overline{T}_Y(t) = g(t)\overline{T}_X(t)$$

die stationäre Systemantwort gemäß Gleichung (10) die simulierte Aktiator-Antwort:

$$\text{GI.(10)} \qquad \overline{T}_Y(t) = \hat{T}_Y \sin(\omega_D(t - \bar{t}_D) + \varphi_A) + n_{CN}(t - \bar{t}_D),$$

mit der Amplitude $\hat{T}_Y$ und der Phasenverschiebung $\varphi_A$. Die Systemantwort auf Rauschanregung geht dabei durch den Term $n_{CN}(t)$ ein. Aufgrund des Filterungs-Effektes des Aktuators kann diese Rauschanregung $n_{CN}(t)$ als vernachlässigbar klein gegenüber dem harmonischen Schwingungsanteil betrachtet werden.

Wie auch aus dem Blockschaltbild der Figur 2 hervorgeht, werden die (obigen) Amplituden $\hat{T}_X$ und $\hat{T}_Y$ des periodischen Schwingungsanteils innerhalb der Funktionen $\overline{T}_X(t)$ und $\overline{T}_Y(t)$ über eine AutokorrelationsFunktion geschätzt, um die Amplitude des phasenkorrigierten Sollsignals $\overline{T}_X(t)$ derart zu korrigieren, dass die Stellamplitude des Aktuators der Störamplitude entspricht.
Die Autokorrelation von $T_X(t)$ führt zu Gleichung (11):

$$\text{GI.(11)} \qquad \overline{\Theta}_{T_X T_X}(\tau) = \frac{1}{t_2 - t_1} \int_{t_1}^{t_2} \overline{T}_X(t)\overline{T}_X(t - \tau)dt$$

Zusammen mit Gleichung (8) erhält man hieraus die folgende Gleichung (12)

$$(\text{GI.12}) \qquad \overline{\Theta}_{T_X T_X}(\tau) = \begin{cases} \hat{T}_D^2[\cos(\omega_D\tau) + \Delta_1] + K & for \quad \tau = 0 \\ \hat{T}_D^2[\cos(\omega_D\tau) + \Delta_1] & for \quad \tau \neq 0 \end{cases}$$

Dabei stellt "K" einen sog. Rauschterm dar, der bereits in Verbindung mit Gleichung (1) erwähnt wurde und durch den Fahrbahnunebenheiten annähernd berücksichtigt werden können.
Für die Fehlergröße $\Delta_1$ hingegen gilt

$$\text{GI.(13)}: \Delta_1 = \frac{1}{2\omega_D(t_2 - t_1)}\left(-\sin(2\omega_D(t_2 - \bar{t}_D) - \omega_D\tau) + \sin(2\omega_D(t_1 - \bar{t}_D) - \omega_D\tau)\right)$$

Dabei folgt für die Amplitude $\hat{T}_D$ des periodischen Störmoments mit $\tau \neq 0$:

$$\text{GI.(14)} \qquad \hat{T}_D \approx \sqrt{2\max(\Theta_{T_X T_X}(\tau))},$$

falls die Fehlergröße $\Delta_1$ sehr viel kleiner als "1" ist.
Durch Messungen ist bekannt, dass übliche für den Fahrer spürbare Lenkrad- Drehschwingungen eine Frequenz in der Größenordnung von 7 Hz nicht unterschreiten. In Anbetracht einer minimalen Drehschwingungsfrequenz von $\omega_{DMIN} = 7 \cdot 2\pi$ und einem Beobachtungs-Zeitfenster von $(t_2 - t_1) = 0.5[s]$, innerhalb dessen der vorgeschlagene Algorithmus die Autokorrelation bildet, ergibt sich ein Fehler $\Delta_1$ im ungünstigsten Fall zu :

$$\text{GI.(15)} \qquad |\Delta_1| \leq 4.5 \cdot 10^{-2}.$$

Mit Gleichung (14) erhält man dann als Schätzwert $\overline{T}_{DE}$ für die Amplitude des periodischen Störmoments:

$$\text{Gl.(16)} \qquad \overline{\hat{T}}_{DE} = \sqrt{2\max(\Theta_{T_X T_X}(\tau))}$$

Entsprechend ergibt sich als Schätzwert für die Amplitude der weiter oben bereits genannten Systemantwort $\hat{T}_Y$:

$$\text{Gl.(17)} \qquad \overline{\hat{T}}_{YE} = \sqrt{2\max(\Theta_{T_Y T_Y}(\tau))}$$

Somit beträgt das sog. Amplitudenverhältnis bzw. der Verstärkungsfaktor für das Aktuatormodell $\overline{c} = \dfrac{\overline{\hat{T}}_{DE}}{\overline{\hat{T}}_{YE}}$ (Gleichung (18)).

Nun gilt es die in Gl.(8) verwendete Verzögerungszeit $\overline{t}_D$ zu bestimmen. Dies ist diejenige Zeit, um die das geschätzte Störmoment $\overline{T}_E(t)$ zusätzlich zu der Zeitverzögerung des Aktuatormodells verzögert werden muss, um ein um 180° phasenverschobenes Gegenmoment zu erzeugen. Diese wird über die Kreuz-Korrelation von Sollmoment zu Istmoment des Aktuatormodells ermittelt, gemäß folgender Gleichung (19):

$$\text{Gl.(19)} \qquad \overline{\Theta}_{T_X T_Y}(\tau) = \frac{1}{t_2 - t_1} \int_{t_1}^{t_2} \overline{T}_X(t)\overline{T}_Y(t-\tau)\,dt$$

Hieraus ergibt sich Gleichung (20)

$$\text{Gl.(20)} \qquad \overline{\Theta}_{T_X T_X}(\tau) = \frac{\hat{T}_D{}^2 \hat{T}_Y{}^2}{2}\left[\cos(\omega_D \tau - \varphi_A) + \Delta_3\right]$$

mit einer Fehlergröße $\Delta_3$, wiederum sehr viel kleiner als "1" ist. Diese Kreuz-Korrelation erreicht ihr Minimum, also eine 180° Phasenverschiebung, für

$$\text{Gl.(21)} \qquad \omega_D \overline{t}_D - \varphi_A = (2n+1)\pi \text{, mit } n \in N$$

Daraus ergibt sich schließlich die Zeitverzögerung zu

$$\text{Gl.(22)} \qquad \overline{t}_D = \frac{(2n+1)\pi + \varphi_A}{\omega_D}$$

Das phasenkorrigierte, aber noch nicht amplitudenkorrigierte Sollmoment oder Stellmoment $\overline{T}_X(t)$ des Aktuator-Modells wird daraufhin durch Multiplikation mit dem Verstärkungsfaktor $\overline{c}$ des Aktuator-Modells amplitudenkorrigiert und bildet somit das erforderliche Stellmoment (oder Sollmoment) des Aktuators durch folgende Gleichung (23):

$$\text{Gl.(23)} \qquad \overline{T}_{A\,DES}(t) = \overline{c}\,\overline{T}_{X}(t)$$

Im Folgenden wird gezeigt, dass das Sollmoment von Gleichung (23) eine erfolgreiche Kompensation des Störmomentes bewirkt:

Unter Berücksichtigung der Gleichungen (8), (18) und (23) ergibt sich

$$\text{Gl.(24)} \qquad \overline{T}_{A\,DES}(t) = \frac{\overline{\hat{T}}_{DE}}{\overline{\hat{T}}_{YE}}\,\hat{T}_{D}\sin(\omega_{D}(t - \overline{t}_{D})) + n(t - \overline{t}_{D})$$

Analog den Gleichungen (8) bis (10) liefert die harmonische Erregung des Aktuators

$$\text{Gl.(25)} \qquad T_{A}(t) = g(t)\overline{T}_{A\,DES}(t)$$

die stationäre Zeitantwort:

$$\text{Gl.(26)} \qquad T_{A}(t) = \frac{\overline{\hat{T}}_{DE}}{\overline{\hat{T}}_{YE}}\,\hat{T}_{Y}\sin(\omega_{D}(t - \overline{t}_{D}) + \varphi_{A})$$

Zusammen mit Gleichung (22) erhält man

$$\text{Gl.(27)} \qquad T_{A}(t) = \frac{\overline{\hat{T}}_{DE}}{\hat{T}_{YE}}\,\hat{T}_{Y}\sin(\omega_{D}(t - (2n+1)\pi)),\ \text{mit}\ n \in N\ .$$

Mit Gleichung (14) und analog dazu $\hat{T}_{Y} \approx \hat{T}_{YE}$ ist somit die Forderung der Gleichung (4) im wesentlichen erfüllt, nämlich $T_{A}(t) \approx -\hat{T}_{D}\sin(\omega_{D}t)$

Solange also das Übertragungsverhalten des Aktuators als linear bezeichnet werden kann, ist die Funktionalität des vorgeschlagenen Systems bzw.

Algorithmus zumindest bei stationärer Betrachtungsweise unabhängig von der Verstärkung und Phasenverschiebung des Aktuators (oder Stellmotors 15). Sowohl Phasenfehler als auch Amplitudenfehler nehmen dabei mit zunehmendem Beobachtungs-Zeitfenster ab, wohingegen der Rechenaufwand steigt. Selbstverständlich kann eine Vielzahl von Details abweichend von obigen Ausführungen gestaltet sein, ohne den Inhalt der Patentansprüche zu verlassen.

Tabelle 1 : Nomenklatur

| | |
|---|---|
| $T_{Driver}$ | vom Fahrer aufgebrachtes Drehmoment |
| $\overline{T}_{TBSW}$ | gemessenes Drehoment am Lenkrad (gemessen) |
| $T_A$ | Aktuator Moment |
| $T_{TBHPS}$ | Drehmoment am Lenkunterstützungssystem |
| $F_{LL}$ | linke Spurstangenkraft |
| $F_{LR}$ | rechte Spurstangenkraft |
| $F_{HPS}$ | Servokraft der Hydrolenkung |
| $\delta_{SW}$ | Lenkwinkel des Lenkrades |

(fortgesetzt)

| | |
|---|---|
| $\delta_{SC}$ | Lenkwinkel der Lenkspindel |
| $\Theta_{SC}$ | Torsions-Trägheitsmoment von der Lenkspindel mit Aktuator-Rotor |
| $u_R$ | Zahnstangenposition |
| $\overline{T}_{A_{DES}}$ | Aktuator Sollmoment |
| $\overline{T}_{EL}(t)$ | geschätztes Störmoment mit linearem Anteil |
| $\overline{T}_E(t)$ | geschätztes Störmoment |
| $\overline{T}_{AE}$ | geschätztes Aktuator-Stell- oder Sollmoment |
| $\overline{T}_X$ | Sollmoment des Aktuator-Modells |
| $\overline{\overline{T}}_{DE}$ | Geschätzte Stör-Amplitude |
| $\overline{T}_Y$ | Istmoment des Aktuator-Modells |
| $\overline{T}_{YE}$ | Geschätzte Amplitude von $\overline{T}_Y$ |
| $\overline{c}$ | Verstärkungsfaktor des Aktuator-Modells |
| $\overline{t}_D$ | Verzögerungszeit |
| $\overline{\Theta}_{T_\Xi T_\Xi}(\tau)$ | Autokorrelation von $\overline{T}_X$ |
| $\overline{\Theta}_{T_\Psi T_\Psi}(\tau)$ | Autokorrelation von $\overline{T}_Y$ |
| $\overline{\Theta}_{T_\Xi T_\Psi}(\tau)$ | Kreuzkorrelation von $\overline{T}_X$und $\overline{T}_Y$ |

## Patentansprüche

1. Verfahren zum Betrieb einer Vorrichtung zur Reduzierung von Lenkrad-Drehschwingungen an einem Kraftfahrzeug, wobei mittels eines aktiv ansteuerbareren Aktuators (15) in Form eines elektronisch ansteuerbaren elektrischen Stellmotors (15) Schwingungen eines im Lenkstrang des Fahrzeugs vorgesehenen Übertragungsgliedes für die Lenkvorgabe des Fahrzeugführers zumindest teilweise kompensiert werden, indem der Aktuator an einer Stelle des Lenkstrangs geeignete Gegenschwingungen einleitet,
**dadurch gekennzeichnet, dass** zur Ansteuerung des Aktuators (15) ein Algorithmus verwendet wird, in dem während eines Zeitfensters das Lenkrad-Drehmoment auf periodische Schwingungen, die als Stör-Drehmoment interpretiert und als harmonische Funktion mit einer Amplitude ($\hat{\overline{T}}_D$) und einer Frequenz ($\omega_D$) beschrieben werden, untersucht wird, denen mittels des Aktuators (15) unter Berücksichtigung von dessen Zeitverzögerung und Amplitudenveränderung ein entsprechendes, diese periodischen Schwingungen im wesentlichen kompensierendes Gegenmoment überlagert wird.

2. Verfahren nach Anspruch 1,
**dadurch gekennzeichnet, dass** über ein Aktuator-Schätzmodell der Einfluss des Aktuators eliminiert wird und weiterhin ein linearer Momentenanteil innerhalb des Zeitfensters eliminiert wird, um die kompensierte Lenkrad-Drehschwingung zu rekonstruieren.

3. Verfahren nach Anspruch 2,
**dadurch gekennzeichnet, dass** unter Verwendung eines Aktuator-Schätzmodells mit linearem Übertragungsverhalten aus einem Sollmoment und einem Istmoment des Aktuators über Kreuzkorrelation die erforderliche Phasenverschiebung und über Autokorrelation die Amplitudenkorrektur ermittelt wird.

## Claims

1. A method for operating a device for reducing steering wheel torsional vibrations on a motor vehicle, wherein vibrations of a transmission member provided in the steering line of the vehicle for the steering input of the driver are at least partially compensated by means of an actively activatable actuator (15) in the form of an electronically activatable electric servomotor (15), in that the actuator initiates suitable counter-vibrations at one point of the steering line, **characterised in that** an algorithm is used to activate the actuator (15), and **in that** during a time window, the steering wheel torque is investigated for periodic vibrations, which are interpreted as disturbing torque and described as a harmonic function with an amplitude ($\hat{\overline{T}}_D$) and a frequency ($\omega_D$), on which a corresponding counter-torque substantially compensating these periodic vibrations is superimposed by means of the actuator (15) taking into account the time delay and amplitude change thereof.

**2.** A method according to claim 1, **characterised in that** the influence of the actuator is eliminated by means of an actuator estimation model and furthermore, a linear torque fraction is eliminated within the time window to reconstruct the compensated steering wheel torsional vibration.

**3.** A method according to claim 2, **characterised in that** using an actuator estimation model with linear transmission behaviour, the required phase displacement is determined from a desired torque and an actual torque of the actuator by means of cross correlation and the amplitude correction is determined by means of autocorrelation.

**Revendications**

**1.** Procédé de gestion d'un dispositif de réduction des oscillations d'un volant de direction de véhicule automobile selon lequel, à l'aide d'un actionneur (15) commandé de manière active, sous la forme d'un moteur d'actionneur électrique (15) à commande électronique, on compense au moins partiellement les oscillations d'un organe de transmission prévu dans la ligne de direction du véhicule pour la consigne de direction du conducteur en ce que l'actionneur induit des contre-oscillations appropriées à un endroit de la ligne de direction,
**caractérisé en ce que**
pour commander l'actionneur (15), on utilise un algorithme dans lequel, pendant une fenêtre de temps, on interprète les oscillations périodiques du couple du volant comme couple parasite et on les décrit comme fonctions harmoniques d'une amplitude ($\hat{T}_D$) et d'une fréquence ($\omega_D$), pour les examiner, et à l'aide de l'actionneur (15) en tenant compte de la temporisation et de la variation d'amplitude, on combine un couple antagoniste compensant pratiquement ces oscillations périodiques.

**2.** Procédé selon la revendication 1,
**caractérisé en ce qu'**
un modèle d'évaluation d'actionneur élimine l'influence de l'actionneur et en outre la composante linéaire du couple dans la fenêtre de temps pour reconstruire l'oscillation compensée du volant de direction.

**3.** Procédé selon la revendication 2,
**caractérisé en ce qu'**
en utilisant un modèle d'évaluation d'actionneur, avec une fonction de transfert linéaire, à partir d'un couple de consigne et d'un couple réel de l'actionneur, par corrélation croisée, on détermine le déphasage nécessaire et par autocorrélation, on détermine la correction d'amplitude.

Fig. 1a

Fig. 16

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2249655 A1

- EP 1114746 A2